# FASCICULE DE BREVET EUROPEEN

(11) **EP 0 739 073 B1**
(45) Date de publication et mention de la délivrance du brevet: **17.10.2001**
(21) Numéro de dépôt: 96410035.8
(22) Date de dépôt: 16.04.1996
(51) Int. Cl.: H02H 3/33

(54) **Dispositif de protection différentielle**
Differentialschutz
Differential protection device

(30) Priorité: 18.04.1995 FR 9504851
(43) Date de publication de la demande: 23.10.1996
(73) Titulaire: Schneider Electric Industries SA, 92500 Rueil-Malmaison (FR)
(72) Inventeur: Macioce, Catherine, 38050 Grenoble Cedex (FR); Blain, Yves, 38050 Grenoble Cedex (FR)
(74) Mandataire: Jouvray, Marie-Andrée

(56) Documents cités:
- EP-A- 0 484 698
- CH-A- 656 262
- DE-A- 3 907 148

## Description

L'invention concerne un dispositif de protection différentielle comportant un capteur de courant pour mesurer un courant différentiel circulant dans des conducteurs d'un réseau électrique, des moyens de traitement comportant des moyens de redressement connectés au capteur de courant, et un actionneur connecté aux moyens de traitement.

Les dispositifs de protection différentielle connus protègent des installations électriques contre les courants de défaut terre. Ils comportent généralement un capteur sous la forme d'un transformateur à noyau torique dont des enroulements primaires sont parcourus par les courants des conducteurs d'une installation à protéger. Un enroulement secondaire dudit transformateur fournit un signal de défaut différentiel lorsque la somme des courants parcourant les enroulements primaires n'est pas nulle. Ledit signal de défaut est proportionnel au courant de défaut homopolaire de l'installation à protéger.

Un relais de déclenchement, connecté à l'enroulement secondaire, est destiné à déclencher l'ouverture d'un interrupteur ou d'un disjoncteur associé au dispositif de protection différentiel. Le déclenchement de l'ouverture doit se produire lorsque le courant de défaut homopolaire atteint un seuil de déclenchement prédéterminé. Le relais de déclenchement reçoit le signal de défaut et provoque le déclenchement lorsque le signal de défaut atteint un seuil d'actionnement propre au relais.

La précision du seuil d'actionnement dépend essentiellement de la constitution du relais. La fabrication d'un relais ayant un seuil d'actionnement précis est difficile et coûteuse. Pour compenser les écarts de seuil d'actionnement des relais, les dispositifs de protection connus comportent des moyens de réglagedu seuil du relais.

Les réglages du seuil du relais permettent un déclenchement précis mais rendent la fabrication des dispositifs de protection complexe et coûteuse. Des relais de déclenchement de type polarisés ont des seuils d'actionnement plus précis, mais ne permettent pas d'éviter les réglages.

Un brevet Suisse CH656262 décrit un circuit de traitement pour un dispositif de protection différentielle comprenant un transistor unijonction commandé par une diode Zener pour actionner un relais lorsqu'une tension sur un condensateur de temporisation dépasse un seuil. Dans ce dispositif, le condensateur de temporisation est chargé à travers un circuit de limitation de courant pour garantir un temps de déclenchement constant. Cependant, la présence d'un limiteur de courant entre un premier condensateur et le condensateur de temporisation modifie la l'impédance de l'ensemble du circuit de traitement et rend la réponse en courant non-linaire. De plus, ce dispositif de déclenchement comporte un réglage de la temporisation et du courant de limitation qui influence aussi le seuil de déclenchement en modifiant la charge du capteur de courant.

L'invention a pour but un dispositif de protection différentielle de fabrication, simple et économique, ne nécessitant pas de réglage de compensation de seuil d'actionnement du relais de déclenchement.

Un dispositif de protection différentielle selon l'invention comprend les caractéristiques de la revendication 1.

Dans un mode préférentiel de réalisation, les moyens de traitement comportent des moyens de redressement et d'écrêtage combinés comportant une première et une seconde entrées alternatives, une sortie positive, une sortie négative et quatre diodes de redressement connectées en pont redresseur entre les entrées alternatives et les sorties positive et négative, au moins deux des quatre diodes de redressement étant des diodes écrêteuses.

Dans un mode différent de réalisation, les moyens de traitement comportent des moyens redressement et d'êcretage combinés comportant une première et une seconde entrées alternatives, une sortie positive, une sortie négative et un circuit doubleur de tension connecté entre les entrées alternatives et les sorties positive et négative.

Le dispositif de protection différentielle peut comporter une capacité d'accord connectée en sortie du capteur de courant différentiel pour accorder ledit capteur à une fréquence sensiblement égale à la fréquence du courant différentiel à mesurer.

Les moyens de commande comportent un dispositif semi-conducteur connecté, en série avec l'actionneur, en parallèle sur la capacité de stockage, ledit dispositif semi-conducteur comportant une électrode de commande connectée aux moyens de comparaison.

Dans un mode particulier de réalisation, les moyens de comparaison comportent une diode à seuil de tension connectée entre une borne de la capacité de stockage et la sortie de contrôle desdits moyens de comparaison.

Selon un développement des modes de réalisation précédents, les moyens de comparaison comportent un circuit électronique comportant un comparateur de tension ayant une première entrée connectée à une tension de référence, une seconde entrée connectée à une borne de la capacité de stockage, et une sortie correspondant à la sortie de contrôle desdits moyens de comparaison.

Le circuit électronique est, de préférence, réalisé en technologie métal-oxide-semiconducteur.

Selon un développement de l'invention, le dispositif comporte un module d'affichage connecté à des sorties pour modules auxiliaires.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

La figure 1 représente le schéma d'un dispositif de protection différentielle connu.

La figure 2 représente un premier schéma d'une unité de traitement.

La figure 3 représente un second schéma d'une unité de traitement.

La figure 4 représente le schéma d'une unité de traitement selon un mode de réalisation de l'invention comportant un circuit électronique de comparaison.

La figure 5 représente le schéma d'un circuit électronique de comparaison de l'unité de traitement de la figure 4.

La figure 6 montre un dispositif comportant une unité de traitement de la figure 4 associé à un disjoncteur et à un module d'affichage.

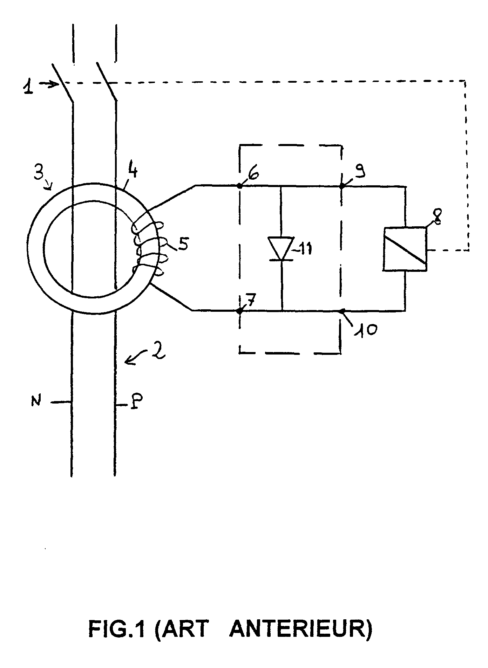

Un dispositif de protection différentielle connu associé à un interrupteur 1 est représenté sur la figure 1. Les contacts de l'interrupteur 1 permettent d'établir ou d'interrompre le courant dans des conducteurs N et P d'un réseau à protéger. Un transformateur 3 comportant un circuit circuit magnétique 4 de forme torique comprend un enroulement primaire constitué par l'ensemble des conducteurs 2 du réseau et un enroulement 5 secondaire constitué par plusieurs spires bobinés sur le circuit magnétique. L'enroulement secondaire est connecté à des entrées 6 et 7 d'une unité de traitement. Un relais 8 de déclenchement, connecté à des sorties 9 et 10 de l'unité de traitement, provoque l'ouverture des contacts de l'interrupteur lorsqu'un signal d'intensité suffisamment élevée lui est appliqué. Le relais est, dans ce cas, par exemple de type polarisé.

L'unité de traitement comporte une diode 11, connectée entre l'entrée 6 et l'entrée 7. L'entrée 7 est reliée à la sortie 10 de polarité négative et l'entrée 6 est reliée à la sortie 9 de polarité positive. La diode 11 permet de redresser le signal fourni par l'enroulement secondaire et d'écrêter les surtensions parasites pouvant entraîner des déclenchements intempestifs.

Lorsqu'un défaut terre ou homopolaire apparaît dans le réseau à protéger, la somme vectorielle des courants circulant dans le primaire n'est pas nulle et un signal proportionnel au défaut terre est généré au secondaire. Le courant représentatif du signal est appliqué au relais 8. Le déclenchement du dispositif doit se faire à une valeur prédéterminée du signal de défaut. Le relais de déclenchement a un seuil d'actionnement pouvant comporter un écart par rapport à une valeur nominale. Pour compenser cet écart, le relais 8 est ajusté de manière à ce que le seuil de déclenchement du dispositif soit précis.

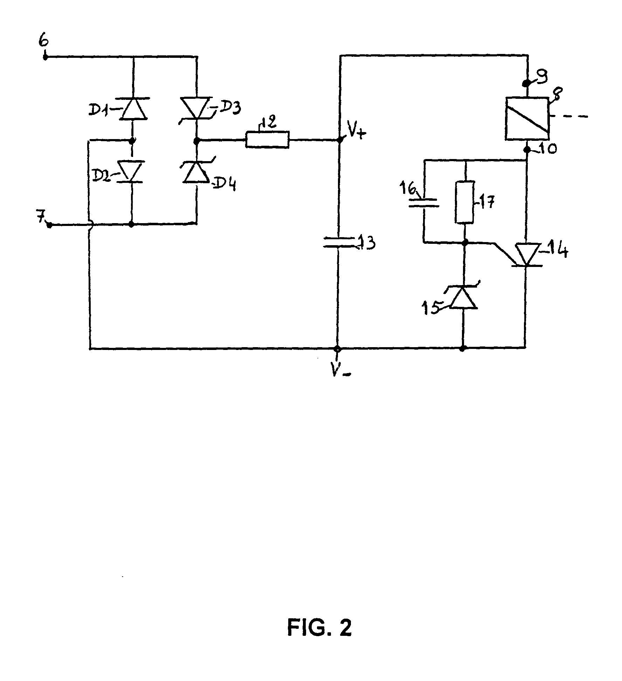

Une unité de traitement d'un dispositif, représentée sur la figure 2, ne nécessite pas de moyens de compensation du seuil d'actionnement du relais. L'unité de traitement comporte un pont redresseur formé de quatre diodes D1, D2, D3 et D4, un filtre de type RC formé d'une résistance 12 et d'un condensateur 13, un composant 14 de commande du relais et une diode 15 à seuil de tension inverse.

Le relais utilisé dans ce mode de réalisation est sensible et doit être protégé en tension. Pour effectuer cette protection, les diodes D3 et D4 du pont redresseur sont des diodes écrêteuses qui limitent la tension de sortie du pont. Les cathodes des diodes D3 et D4, reliées entre elles, forment la sortie positive du pont. Les anodes de D1 et D2 forment la sortie négative du pont alimentant une ligne V-. La cathode de D1 et la anode de D3 sont reliées à l'entrée 6 de courant alternatif, et l'cathode de D2 et l'anode de D4 sont reliées à l'entrée 7 de courant alternatif.

La résistance 12 du filtre est connectée entre la sortie positive du filtre et une ligne V+. Le condensateur 13 est connecté entre les lignes V- et V+. Le relais 8 est connecté à travers la sortie 9 à la ligne V+, et à travers la sortie 10 au composant 14 de commande. Le composant 14 est, dans ce mode de réalisation, un transistor programmable ou un transistor unijonction connecté entre la ligne V- et la borne 10. La diode 15 a son anode connectée à V- et sa cathode connectée à une électrode de commande du transistor 14. Un circuit RC, composé par un condensateur 16 et une résistance 17, connectée en parallèle entre la borne 10 et l'électrode de commande de 14, polarise et protège l'électrode de commande du transistor 14.

Le signal alternatif fourni par le secondaire du transformateur est redressé par le pont D1 à D4. La tension de sortie, dont la valeur est limitée par les diodes D3 et D4, est appliquée au filtre RC 12 et 13. Le but du filtre est de retarder le signal de manière à provoquer le déclenchement selon des courbes préétablies. Le retard peut être, par exemple, de 100 ms si le défaut est deux fois plus grand que le niveau de déclenchement. Le condensateur 13 de stockage a, en plus du filtrage, une fonction de réservoir d'énergie qui garantit un fonctionnement fiable du relais polarisé.

Lorsque la tension aux bornes du condensateur 13, entre les lignes V+ et V-, dépasse la tension de seuil de la diode 15, un courant traverse la diode 15 et l'électrode de commande. Le transistor 14 est commandé et se met à conduire. L'énergie stockée dans le condensateur ainsi que le courant fourni par le secondaire sont appliqués au relais qui produit le déclenchement. Le seuil de tension de la diode 15 est nettement supérieur à la tension à appliquer au relais pour qu'il produise un déclenchement. En conséquence, les tensions et les courants des relais n'interviennent plus.

La précision du seuil de déclenchement dépend essentiellement de la précision de la tension inverse de la diode 15 qui peut être du type Zener ou à avalanche. Le courant dans le relais au moment du déclenchement est supérieur à son seuil d'actionnement. Il n'y a plus de relation entre la précision du seuil d'actionnement du relais et la précision du déclenchement.

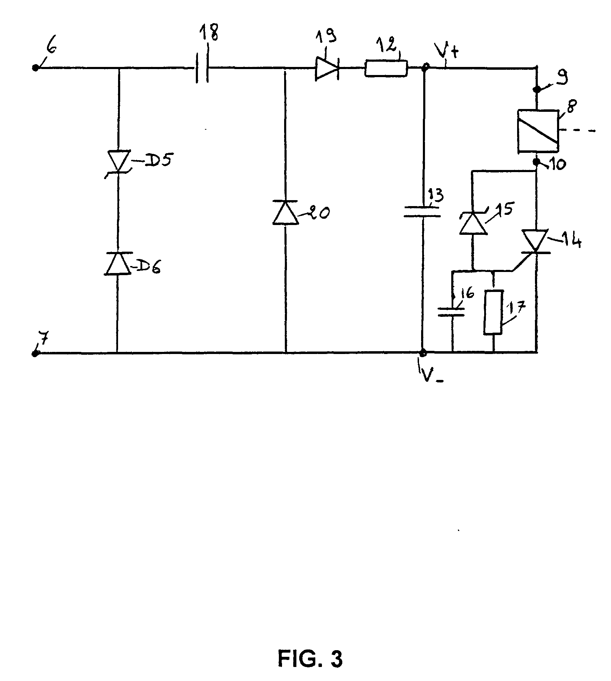

Un second mode de réalisation d'une unité de traitement est représenté sur la figure 3. Le pont redresseur est remplacé par un circuit doubleur de tension. La protection en surtension est réalisée par deux diodes écrêteuses D5 et D6 connectées en série, tête-bêche, entre les entrées alternatives 6 et 7 de l'unité de traitement. La ligne V- de tension négative est connectée à l'entrée 7 et à l'anode de la diode écrêteuse D6. Le circuit doubleur de tension comporte un condensateur 18 et deux diodes 19 et 20. Le condensateur 18 est connecté entre l'entrée alternative 6 et l'anode de la diode 19 dont la cathode est reliée à la résistance 12 de filtrage. La diode 20 a son anode connectée à la ligne V- et sa cathode reliée à l'anode de la diode 19 et au condensateur 18.

Le circuit doubleur de tension a pour fonction d'élever la tension du signal, représentatif d'un défaut, appliqué à l'entrée du filtre formé par la résistance 12 et le condensateur 13. Pendant l'alternance négative, l'entrée 6 est négative et l'entrée 7 est positive. Le courant du secondaire circule dans la diode 20 et charge le condensateur 18. La diode 19 bloque la circulation du courant secondaire dans le reste de l'unité de traitement.

Ensuite, pendant l'alternance positive, la diode 20 est bloquée et la diode 19 est conductrice. Le filtre reçoit une tension sensiblement égale à la somme de la tension du secondaire et de la tension du condensateur 18 chargé. Le courant circule dans le condensateur 18, la diode 19 et la résistance 12, et charge le condensateur 13 de stockage.

Dans l'unité de traitement de la figure 3, le composant 14 est un thyristor dont l'anode est connectée à la sortie 10, la cathode à la ligne V- et la gâchette au circuit RC 16 et 17 de polarisation et de protection. La diode 15 à seuil est connectée entre l'anode et la gâchette du thyristor 14.

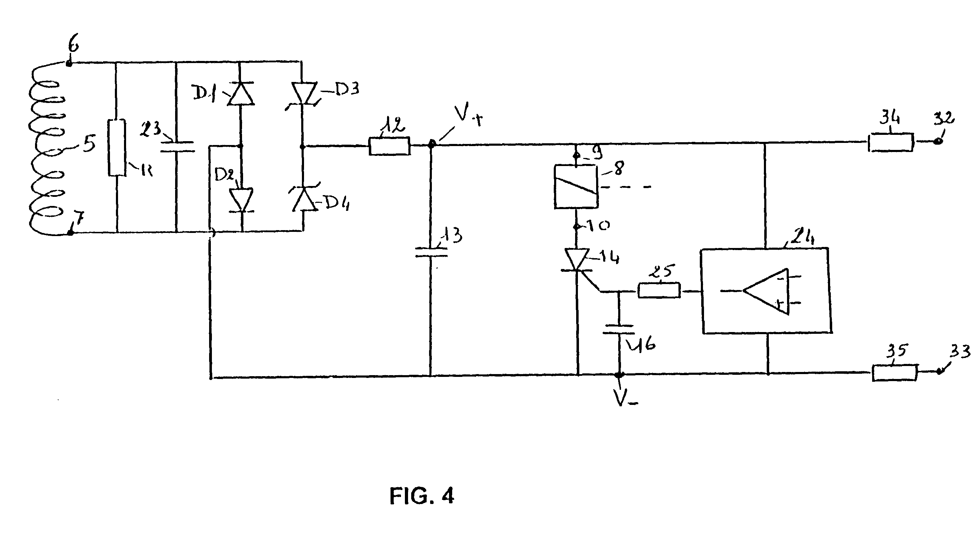

La figure 4 représente le schéma d'une unité de traitement comportant un condensateur 23 d'accord, et un circuit électronique 24 de comparaison. Le condensateur 23 d'accord connecté entre les entrées 6 et 7 est placé en parallèle sur le secondaire du transformateur de courant pour former un circuit résonant LC. Le circuit LC est accordé à une fréquence sensiblement égale à la fréquence du réseau à protéger de manière à augmenter l'amplitude du signal de défaut et atténuer les signaux parasites.

Le circuit électronique 24 de comparaison comporte une première entrée connectée à la ligne V+, une seconde entrée connectée à la ligne V-, et une sortie connectée à la gâchette du thyristor 14 à travers une résistance 25. Lorsque la tension entre les premières et secondes entrées du circuit 24 dépasse une valeur prédéterminée, la sortie du circuit 24 change d'état et commande la mise en conduction du thyristor 14.

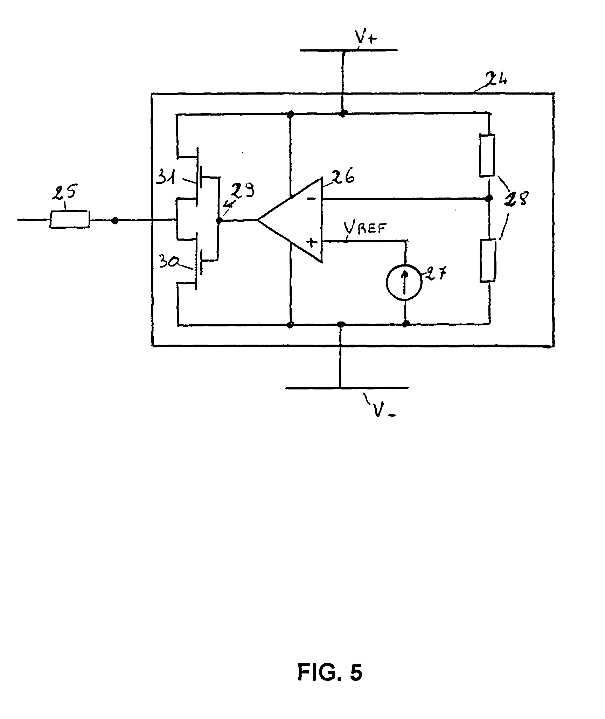

Un schéma interne d'un circuit 24 de comparaison est représenté sur la figure 5. Il comporte un comparateur 26 et une cellule tampon reliant une sortie du comparateur à la sortie du circuit 24, une référence de tension 27 fournissant une tension de référence Vref à une entrée non-inverseuse du comparateur, et un pont résistif 28 connecté entre les première et seconde entrées de 24. Le point commun du pont 28 est relié à une entrée inverseuse du comparateur.

Si la tension entre les lignes V+ et V- est faible, la tension à la sortie du pont résistif est inférieure à la tension de référence Vref, la sortie du comparateur est à l'état haut et rend conducteur un transistor 30 de la cellule tampon 29 reliant la sortie du circuit 24 à la ligne V-. La gâchette du thyristor 14 est au potentiel de la cathode. Le thyristor 14 reste bloqué.

Lorsque la tension entre les lignes V+ et V- augmente, la tension à la sortie du pont résistif augmente proportionnellement. Lorsque la tension de sortie du pont résistif devient supérieure à la tension de référence Vref, la sortie du comparateur 26 passe alors à l'état bas, bloque le transistor 30 et rend conducteur un transistor 31 de la cellule tampon. Le transistor 31 relie la sortie du circuit 24 à la ligne V+ et rend conducteur le thyristor 14. Dans ce mode de réalisation le seuil de déclenchement dépend de la valeur de la tension de référence Vref et des résistances du pont 28.

Pour réduire la consommation de courant sur les lignes V+ et V- et ne pas altérer les valeurs du seuil de déclenchement, les composants actifs du circuit de comparaison sont, de préférence, réalisés en technologie CMOS.

Dans ce mode de réalisation, une résistance R connectée entre les entrées 6 et 7 permet de modifier le calibre du dispositif de protection. Par exemple, le calibre peut correspondre à un seuil de courant de défaut différentiel situé entre 30 mA et 300 mA.

Pour améliorer la précision des dispositifs de protection différentielle, l'enroulement secondaire 5 des transformateurs toriques peut avoir un nombre de spires dépendant de la perméabilité du circuit magnétique et de la charge que représente l'unité de traitement.

Selon un mode réalisation de l'invention, l'unité de traitement de la figure 4 comporte des sorties 32 et 33 permettant de connecter des modules auxiliaires. Les sorties 32 et 33 sont connectées respectivement à la ligne V+ à travers une résistance de découplage 34 et à la ligne V- à travers une résistance de découplage 35.

La tension entre les lignes V+ et V- est représentative du signal de défaut généré au secondaire du transformateur et n'est pas modifiée par des résistances de réglage. La tension sur les sorties 32 et 33 des unités de traitement, pour une valeur de défaut donnée, est sensiblement la même pour chaque dispositif de protection indépendant du relais, et permet une interchangeabilité par rapport aux modules auxiliaires.

Les résistances 34 et 35 de découplage ont des valeurs élevées permettant la protection de l'unité de traitement.

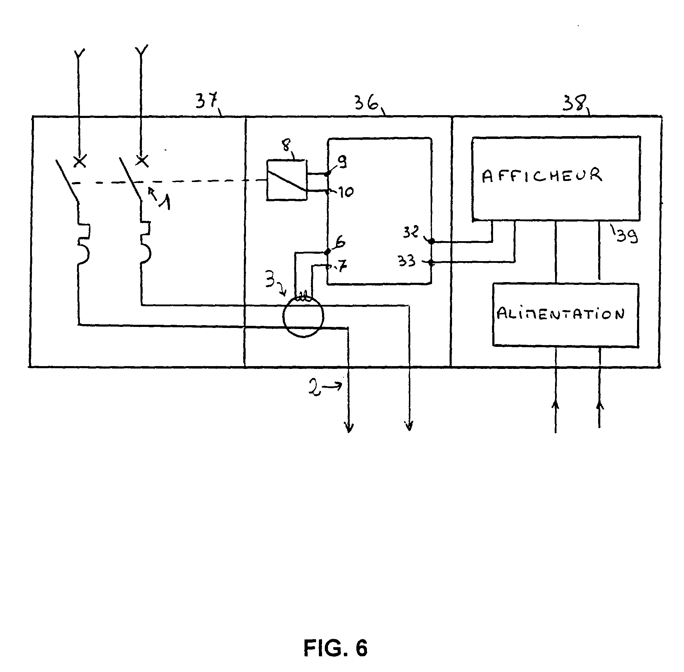

Les modules auxiliaires peuvent être, notamment, des modules d'affichage de la valeur du courant de défaut. La figure 6 montre un dispositif 36 de protection différentielle associé à un disjoncteur 37 et à un module d'affichage 38 disposés de manière modulaire.

Le module 38 comporte un afficheur 39, relié aux sorties 32 et 33, et une alimentation 40 fournissant l'énergie électrique nécessaire au fonctionnement de l'afficheur. L'afficheur peut être de type connu, par exemple analogique, numérique ou mécanique.

Le dispositif de protection différentielle de la figure 6 est associé à un disjoncteur bipolaire mais il pourrait tout aussi bien être associé à un disjoncteur ou à un interrupteur tripolaire ou tétrapolaire. Le tore du transformateur de courant serait alors traversé par trois ou quatre conducteurs primaires.

## Revendications

1. Dispositif de protection différentielle comportant un capteur (5) de courant pour mesurer un courant différentiel circulant dans des conducteurs d'un réseau électrique, des moyens de traitement comportant des moyens de redressement (11) connectés au capteur de courant, des moyens (12, 13) de filtrage électrique connectés aux moyens de redressement et d'écrêtage comportant une capacité de stockage (13), des moyens (15, 24) de comparaison connectés à la capacité de stockage des moyens de filtrage, lesdits moyens de comparaison comportant une sortie de contrôle fournissant un signal de déclenchement si la valeur de la tension de la capacité est supérieure à un seuil prédéterminé, et des moyens (14) de commande d'un actionneur contrôlés par la sortie de contrôle des moyens de comparaison
dispositif **caractérisé en ce qu'**il comporte au moins deux sorties (32, 33) pour modules auxiliaires, chaque sortie pour module auxiliaire étant connectée à travers une résistance (34, 35) de valeur élevée à une borne de la capacité de stockage.

2. Dispositif selon la revendication 1 **caractérisé en ce que** les moyens de traitement comportent des moyens (D1, D2, D3, D4) de redressement et d'écrêtage combinés comportant une première et une seconde entrées alternatives, une sortie positive, une sortie négative et quatre diodes de redressement connectées en pont redresseur entre les entrées alternatives et les sorties positive et négative, au moins deux (D3, D4) des quatre diodes de redressement étant des diodes écrêteuses.

3. Dispositif selon la revendication 1 **caractérisé en ce que** les moyens de traitement comportent des moyens (19, 20, D5, D6) de redressement et d'êcretage combinés comportant une première et une seconde entrées alternatives, une sortie positive, une sortie négative et un circuit (18, 20, 19) doubleur de tension connecté entre les entrées alternatives et les sorties positive et négative.

4. Dispositif selon l'une quelconque des revendications 1 à 3 **caractérisé en ce qu'**il comporte une capacité d'accord (23) connectée en sortie du capteur (5) de courant différentiel pour accorder ledit capteur à une fréquence sensiblement égale à la fréquence du courant différentiel à mesurer.

5. Dispositif selon l'une quelconque des revendications 1 à 4 **caractérisé en ce que** les moyens de commande comportent un dispositif (14) semiconducteur connecté, en série avec l'actionneur, en parallèle sur la capacité de stockage, ledit dispositif semiconducteur comportant une électrode de commande connectée aux moyens (15, 24) de comparaison.

6. Dispositif selon l'une quelconque des revendications 1 à 5 **caractérisé en ce que** les moyens de comparaison comportent une diode (15) à seuil de tension connectée entre une borne de la capacité de stockage (13) et la sortie de contrôle desdits moyens de comparaison.

7. Dispositif selon l'une quelconque des revendications 1 à 5 **caractérisé en ce que** les moyens de comparaison comportent un circuit (24) électronique comportant un comparateur (26) de tension ayant une première entrée connectée à une tension de référence (Vref), une seconde entrée connectée à une borne de la capacité de stockage, et une sortie correspondant à la sortie de contrôle desdits moyens de comparaison.

8. Dispositif selon la revendication 7 **caractérisé en ce que** le circuit (24) électronique est réalisé en technologie métal-oxide-semiconducteur.

9. Dispositif selon l'une quelconque des revendications 1 à 8 **caractérisé en ce qu'**il comporte un module d'affichage (38) connecté à des sorties (32, 33) pour modules auxiliaires.

## Claims

1. An earth leakage protection device comprising a current sensor (5) to measure an earth leakage current flowing in conductors of an electrical power system, processing means comprising means for rectifying (11) connected to the current sensor, means (12, 13) for electrical filtering connected to the means for rectifying and peak-clipping comprising a storage capacitor (13); means (15, 24) for comparison connected to the storage capacitor of the means for filtering, said means for comparison comprising a control output supplying a tripping signal if the value of the voltage of the capacitor is greater than a preset threshold, and means (14) for control of an actuator controlled by the control output of the means for comparison,
a device **characterized in that** it comprises at least two outputs (32, 33) for auxiliary modules, each output for an auxiliary module being connected via a resistor (34, 35) of high value to a terminal of the storage capacitor.

2. The device according to claim 1 **characterized in that** the means for processing comprise combined means (D1, D2, D3, D4) for rectifying and peak-clipping comprising a first and a second AC input, a positive output, a negative output and four rectifying diodes connected as a rectifier bridge between the AC inputs and the positive and negative outputs, at least two (D3, D4) of the four rectifying diodes being peak-clipping diodes.

3. The device according to claim 1 **characterized in that** the means for processing comprise combined means (19, 20, D5, D6) for rectifying and peak-clipping comprising a first and a second AC input, a positive output, a negative output and a voltage doubling circuit (18, 19, 20) connected between the AC inputs and the positive and negative outputs.

4. The device according to any one of the claims 1 to 3 **characterized in that** it comprises a tuning capacitor (23) connected on output of the earth leakage current sensor (5) to tune said sensor to a frequency appreciably equal to the frequency of the earth leakage current to be measured.

5. The device according to any one of the claims 1 to 4 **characterized in that** the means for control comprise a semi-conducting device (14) connected, in series with the actuator, in parallel with the storage capacitor, said semi-conducting device comprising a control electrode connected to the means (15, 24) for comparison.

6. The device according to any one of the claims 1 to 5 **characterized in that** the means for comparison comprise a voltage threshold diode (15) connected between a terminal of the storage capacitor (13) and the monitoring output of said means for comparison.

7. The device according to any one of the claims 1 to 5 **characterized in that** the means for comparison comprise an electronic circuit (24) comprising a voltage comparator (26) having a first input connected to a reference voltage (Vref), a second input connected to a terminal of the storage capacitor, and an output corresponding to the monitoring output of said means for comparison.

8. The device according to claim 7 **characterized in that** the electronic circuit (24) is fabricated using metal-oxide semi-conductor technology.

9. The device according to any one of the claims 1 to 8 **characterized in that** it comprises a display module (38) connected to outputs (32, 33) for auxiliary modules.

## Patentansprüche

1. Fehlerstromschutzeinrichtung, die einen Stromwandler (5) zur Messung eines über die Leiter eines elektrischen Leitungsnetzes fließenden Differenzstroms, Verarbeitungsmittel mit an den Stromwandler angeschlossenen Gleichrichtungsmitteln (11), an die Gleichrichtungs- und Amplitudenbegrenzungsmittel angeschlossene Filtermittel (12, 13) mit einem Speicherkondensator (13), an den Speicherkondensator der Filtermittel angeschlossene Vergleichsmittel (15, 24), welche Vergleichsmittel einen Steuerausgang umfassen, der ein Auslösesignal liefert, wenn die Spannung des Kondensators einen festgelegten Schwellwert überschreitet, sowie über den Steuerausgang der Vergleichsmittel angesteuerte Steuermittel (14) zur Ansteuerung eines Betätigungsglieds umfaßt,
**dadurch gekennzeichnet, daß** sie mindestens zwei Ausgänge (32, 33) zum Anschluß von Hilfsmodulen umfaßt und jeder Ausgang zum Anschluß eines Hilfsmoduls über einen Widerstand (34, 35) mit hohem Widerstandswert an eine Klemme des Speicherkondensators angeschlossen ist.

2. Einrichtung nach Anspruch 1, **dadurch gekennzeichnet, daß** die Verarbeitungsmittel kombinierte Gleichrichtungs- und Amplitudenbegrenzungsmittel (D1, D2, D3, D4) mit einem ersten und einem zweiten Wechselstromeingang, einem positiven Ausgang, einem negativen Ausgang sowie vier Gleichrichterdioden umfassen, die als Gleichrichterbrücke zwischen die Wechselstromeingänge und den positiven und negativen Ausgang geschaltet sind, wobei mindestens zwei (D3, D4) der vier Gleichrichterdioden als Begrenzerdioden ausgebildet sind.

3. Einrichtung nach Anspruch 1, **dadurch gekennzeichnet, daß** die Verarbeitungsmittel kombinierte Gleichrichtungs- und Amplitudenbegrenzungsmittel (19, 20, D5, D6) mit einem ersten und einem zweiten Wechselstromeingang, einem positiven Ausgang, einem negativen Ausgang sowie einer Spannungsverdopplerschaltung (18, 20, 19) umfassen, die zwischen die Wechselstromeingänge und den positiven und negativen Ausgang geschaltet ist.

4. Einrichtung nach irgendeinem der Ansprüche 1 bis 3, **dadurch gekennzeichnet, daß** sie einen, an den Ausgang des Stromwandlers (5) geschalteten Abstimmkondensator (23) umfaßt, um den genannten Stromwandler auf eine Frequenz abzustimmen, die der Frequenz des zu messenden Fehlerstroms annähernd entspricht.

5. Einrichtung nach irgendeinem der Ansprüche 1 bis 4, **dadurch gekennzeichnet, daß** die Steuermittel ein Halbleiterelement (14) umfassen, das mit dem in Reihe zu ihm liegenden Betätigungsglied parallel zum Speicherkondensator geschaltet ist, wobei das genannte Halbleiterelement eine mit den Vergleichsmitteln (15, 24) verbundene Steuerelektrode aufweist.

6. Einrichtung nach irgendeinem der Ansprüche 1 bis 5, **dadurch gekennzeichnet, daß** die Steuermittel eine Spannungsschwellendiode (15) umfassen, die zwischen eine Klemme des Speicherkondensators (13) und den Steuerausgang der genannten Vergleichsmittel geschaltet ist.

7. Einrichtung nach irgendeinem der Ansprüche 1 bis 5, **dadurch gekennzeichnet, daß** die Vergleichsmittel eine elektronische Schaltung (24) mit einem Spannungsvergleicher (26) umfassen, der einen an eine Referenzspannung (Vref) angeschlossenen ersten Eingang, einen an eine Klemme des Speicherkondensators angeschlossenen zweiten Eingang sowie einen dem Steuerausgang der genannten Vergleichsmittel entsprechenden Ausgang umfaßt.

8. Einrichtung nach Anspruch 7, **dadurch gekennzeichnet, daß** die elektronische Schaltung (24) in MOS-Technologie ausgeführt ist.

9. Einrichtung nach irgendeinem der Ansprüche 1 bis 8, **dadurch gekennzeichnet, daß** sie ein Anzeigemodul (38) umfaßt, das an die Ausgänge (32, 33) zum Anschluß von Hilfsmodulen angeschlossen ist.
